# EUROPEAN PATENT APPLICATION

(11) **EP 4 793 939 A1**
(43) Date of publication of application: **19.08.2026**
(21) Application number: 26158704.2
(22) Date of filing: 16.02.2026
(51) Int. Cl.: G09G 5/02

(54) **ADAPTIVE IMAGING FOR COLOR CORRECTION**

(30) Priority: 18.02.2025 US 202563760112 P; 19.12.2025 US 202519427928
(71) Applicant: Apple Inc., Cupertino, CA 95014 (US)
(72) Inventor: RATNASINGAM, Sivalogeswaran, Cupertino, CA, 95014 (US); JAIN, Anshul K., Cupertino, CA, 95014 (US); BAHUKHANDI, Ashirwad, Cupertino, CA, 95014 (US)
(74) Representative: Heckeler, Patrick

(57) **Abstract**

Aspects of the subject technology relate to adaptive imaging for color correction, such as for efficiently providing accurate color representations of virtual content in mixed-reality and/or augmented-reality systems. Adaptive imaging may include adjusting one or more operating features of a sensor, based on information about the virtual content to be displayed and/or information about the physical environment within the virtual content will be displayed to appear. This adaptive imaging can leverage the low sensitivity to color in the peripheral regions of the human visual system to more efficiently perform color correction operations.

## Description

### CROSS REFERENCE TO RELATED APPLICATIONS

This application claims the benefit of priority to U.S. Provisional Patent Application No. 63/760,112, entitled, "Adaptive Imaging for Color Correction", filed on February 18, 2025, the disclosure of which is hereby incorporated herein in its entirety.

### TECHNICAL FIELD

The present description relates generally to electronic devices, including, for example, to adaptive imaging for color correction in electronic devices.

### BACKGROUND

Electronic devices can be used to overlay virtual content on a view of the real world, to create a mixed-reality or augmented-reality scene.

### BRIEF DESCRIPTION OF THE DRAWINGS

Certain features of the subject technology are set forth in the appended claims. However, for purpose of explanation, several implementations of the subject technology are set forth in the following figures.
FIG. 1 illustrates a perspective view of an example electronic device having a display system and a sensor in accordance with various aspects of the subject technology.
FIG. 2 illustrates an example of a physical setting that is viewable through a transparent portion of a display system of an electronic device in accordance with one or more implementations.
FIG. 3 illustrates a chromaticity diagram showing an example of a color correction that may be applied to display content in accordance with one or more implementations.
FIG. 4 illustrates example of display content that may be displayed by a display system of an electronic device in accordance with one or more implementations.
FIG. 5 illustrates an example of a foveated image frame that can be obtained for color correction in accordance with one or more implementations.
FIG. 6 illustrates a block diagram of an example image sensor having an array of sensor pixels in accordance with one or more implementations of the subject technology.
FIG. 7 illustrates a block diagram illustrating a flow of data between elements of an electronic device according to aspects of the subject technology.
FIG. 8 is a block diagram of an illustrative sensor controller of an electronic device, showing various inputs that can be provided to the sensor controller, in accordance with one or more implementations of the subject technology.
FIG. 9 illustrates a flow diagram of an example process for adaptive image capture based on display content according to aspects of the subject technology.
FIG. 10 illustrates a flow diagram of an example process for adaptive image capture based on physical environment information according to aspects of the subject technology.
FIG. 11 illustrates a flow diagram of an example process for adjusting a color correction accuracy based on display content information and/or physical environment information according to aspects of the subject technology.
FIG. 12 illustrates an example computing device with which aspects of the subject technology may be implemented.

### DETAILED DESCRIPTION

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a thorough understanding of the subject technology. However, the subject technology is not limited to the specific details set forth herein and can be practiced using one or more other implementations. In one or more implementations, structures and components are shown in block diagram form in order to avoid obscuring the concepts of the subject technology.

A physical environment refers to a physical world that people can sense and/or interact with without aid of electronic devices. The physical environment may include physical features such as a physical surface or a physical object. For example, the physical environment corresponds to a physical park that includes physical trees, physical buildings, and physical people. People can directly sense and/or interact with the physical environment such as through sight, touch, hearing, taste, and smell. In contrast, an extended reality (XR) environment refers to a wholly or partially simulated environment that people sense and/or interact with via an electronic device. For example, the XR environment may include augmented reality (AR) content, mixed reality (MR) content, virtual reality (VR) content, and/or the like. With an XR system, a subset of a person's physical motions, or representations thereof, are tracked, and, in response, one or more characteristics of one or more virtual objects simulated in the XR environment are adjusted in a manner that comports with at least one law of physics. As one example, the XR system may detect head movement and, in response, adjust graphical content and an acoustic field presented to the person in a manner similar to how such views and sounds would change in a physical environment. As another example, the XR system may detect movement of the electronic device presenting the XR environment (e.g., a mobile phone, a tablet, a laptop, or the like) and, in response, adjust graphical content and an acoustic field presented to the person in a manner similar to how such views and sounds would change in a physical environment. In some situations (e.g., for accessibility reasons), the XR system may adjust characteristic(s) of graphical content in the XR environment in response to representations of physical motions (e.g., vocal commands).

There are many different types of electronic systems that enable a person to sense and/or interact with various XR environments. Examples include head mountable systems, projection-based systems, heads-up displays (HUDs), vehicle windshields having integrated display capability, windows having integrated display capability, displays formed as lenses designed to be placed on a person's eyes (e.g., similar to contact lenses), headphones/earphones, speaker arrays, input systems (e.g., wearable or handheld controllers with or without haptic feedback), smartphones, tablets, and desktop/laptop computers. A head mountable system may have one or more speaker(s) and an integrated opaque display. Alternatively, a head mountable system may be configured to accept an external opaque display (e.g., a smartphone). The head mountable system may incorporate one or more imaging sensors to capture images or video of the physical environment, and/or one or more microphones to capture audio of the physical environment. Rather than an opaque display, a head mountable system may have a transparent or translucent display. The transparent or translucent display may have a medium through which light representative of images is directed to a person's eyes. The display may utilize digital light projection, OLEDs, LEDs, uLEDs, liquid crystal on silicon, laser scanning light source, or any combination of these technologies. The medium may be an optical waveguide, a hologram medium, an optical combiner, an optical reflector, or any combination thereof. In some implementations, the transparent or translucent display may be configured to become opaque selectively. Projection-based systems may employ retinal projection technology that projects graphical images onto a person's retina. Projection systems also may be configured to project virtual objects into the physical environment, for example, as a hologram or on a physical surface.

Implementations of the subject technology described herein may provide efficient capture of physical environment color information for use in color correction of display content that is overlaid on a direct view of the physical environment background (e.g., to account for the effect, on user color perception, of overlaying a color pixel on a colored physical background). This can be particularly helpful for providing augmented reality (AR) or mixed reality (MR) experiences using a transparent (e.g., semi-transparent), or optical see-through (OST) display. This efficient capture can be provided by adaptively modifying the capture of images of the physical environment background based on (i) the virtual content to be overlaid and/or (ii) characteristics of the physical environment itself, to leverage the human visual system's lower sensitivity to colors in the peripheral region.

As examples, adaptively modifying the capture may include adaptive foveated image capture (e.g., foveated sensor readout, such as using in-sensor binning), an adaptive foveated frame rate (e.g., higher frame rate capture in a central region of an image sensor and a lower frame rate capture in a peripheral region of the image sensor), adaptive foveated color capture (e.g., color image capture in central region and monochrome or reduced-color capture in peripheral region), temporally adaptive image capture (e.g., interleaving high and low fidelity frames and/or color and monochrome frames), and/or other adaptive modifications based on the virtual content and/or the physical environment characteristics, as described in further detail hereinafter. Whether or not modified capture is implemented, foveated color-correction accuracy can be used after the background color information has been obtained.

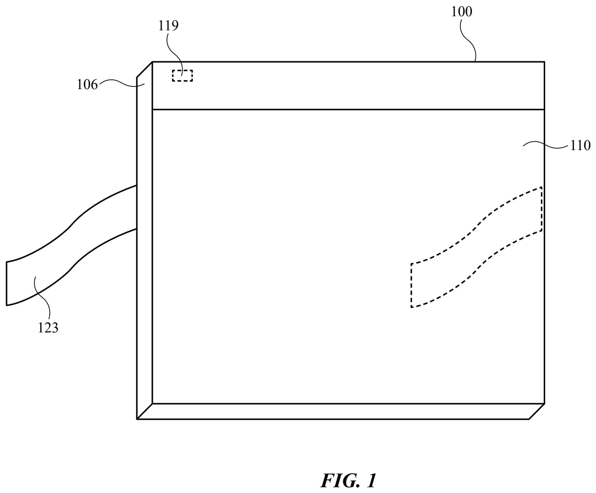

An illustrative electronic device including a display system and one or more cameras is shown in FIG. 1. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

In the example of FIG. 1, electronic device 100 has been implemented using a housing 106 (e.g., a frame) that is sufficiently small to be portable and carried or worn by a user. For example, electronic device 100 of FIG. 1 may be a handheld electronic device (e.g., a tablet computer, a cellular telephone or smart phone), or a wearable device (e.g., a smart watch, smart glasses, a head mountable device (HMD), a pendant device, a headlamp device, or the like). In the example of FIG. 1, electronic device 100 includes a display system such as display system 110 (e.g., mounted to the housing 106). As shown, the electronic device 100 may also include one or more cameras, such as camera 119. Electronic device 100 may also include one or more input components, such as a touch screen incorporated into display system 110, a button, a switch, a dial, a crown, one or more microphones, and/or other input components. The camera 119 and/or other input components may be disposed on or behind an element of the display system 110 and/or on, within, or behind portions of housing 106.

Display system 110 and/or housing 106 may include one or more openings to accommodate one or more buttons, speakers, microphones, light sources, and/or cameras (as examples). Housing 106, which may sometimes be referred to as a case, an enclosure, or a frame, may be formed of plastic, glass, ceramics, fiber composites, metal (e.g., stainless steel, aluminum, etc.), other suitable materials, or a combination of any two or more of these materials. In various implementations, display system 110 may include one or more transparent elements. For example, the display system 110 may include a transparent display through which a user can directly view their physical environment, and with which display content can be displayed to appear in combination with (e.g., overlaid on and/or integrated with) the user's direct view of the physical environment through the transparent display. As another example, the display system 110 may include one or more lenses or other transparent elements through which a user can directly view their physical environment and onto which display content can be projected so as to appear in combination with (e.g., overlaid on and/or integrated with) the user's direct view of the physical environment through the lenses or other transparent elements. For example, in one implementation, the electronic device 100 may be provided as a pair of smart glasses in which lenses mounted in a frame having arms are provided as transparent displays, or can be arranged such that display content (e.g., virtual content) can be displayed and/or projected thereon.

As discussed herein, in some implementations, electronic device 100 may be provided in the form of a wearable device such as a smart watch, a head mountable device, or smart glasses. In one or more implementations, housing 106 may include one or more interfaces for mechanically coupling housing 106 to one or more structures 123 (e.g., straps, arms, or other attachment mechanisms). For example, the structures 123 may be configured for securing the housing 106 to a wearer (e.g., to a wrist or a head of the wearer). In one or more implementations, one or more cameras, such as camera 119, of the electronic device 100 may face in a direction of a field of view of a user of the electronic device 100 when the electronic device 100 is worn by the user (e.g., to facilitate capturing images corresponding approximately to what the user is viewing).

The configuration of electronic device 100 of FIG. 1 is merely illustrative. In other implementations, electronic device 100 may be a computer such as a computer that is integrated into a display such as a computer monitor, a laptop computer, a media player, a gaming device, a navigation device, a computer monitor, a television, a headphone, an earbud, or other electronic equipment having a camera and an at least partially transparent display. The electronic device 100 may operate the display system 110 fir presenting a visualization of an extended reality environment (e.g., including an AR or MR environment) or other display environment to a user. The electronic device 100 may be powered with a battery and/or any other power supply. In an example, the display system of the electronic device 100 provides a stereoscopic presentation of virtual content in an extended reality environment, enabling a three-dimensional visual display of a rendering of virtual content into a physical scene.

Camera(s) 119 may include visible light cameras, infrared cameras, eye tracking cameras, etc. Each camera 119 may include one or more image sensors, each image sensor including an array of sensor pixels (e.g., image sensor pixel) and readout circuitry for reading out the sensor pixels of the array. Further, the electronic device 100 may include various other sensors such as sensor(s) including, but not limited to, touch sensors, microphones, inertial measurement units (IMU), heart rate sensors, temperature sensors, Lidar sensors, radar sensors, depth sensors, sonar sensors, GPS sensors, Wi-Fi sensors, near-field communications sensors, etc. One or more of the sensors may also include an array of sensor pixels (e.g., depth sensor pixels, Lidar sensor pixels, radar sensor pixels, or other sensor pixels other than image sensor pixels).

The electronic device 100 may include hardware elements that can receive user input such as hardware buttons or switches. User input detected by such sensors and/or hardware elements correspond to various input modalities. For example, such input modalities may include, but not limited to, facial tracking, eye tracking (e.g., gaze direction or gaze location tracking), hand tracking, gesture tracking, biometric readings (e.g., heart rate, pulse, pupil dilation, breath, temperature, electroencephalogram, olfactory), recognizing speech or audio (e.g., particular hotwords), and activating buttons or switches, etc. The electronic device 100 may also detect and/or classify physical objects in the physical environment of the electronic device 100 based on images captured by the camera(s) 119 and/or other sensors.

The electronic device 100 may be communicatively coupled to a base device such as a mobile phone, a tablet device, or other companion device in some implementations. Such a base device may, in general, include more computing resources and/or available power in comparison with the electronic device 100. In an example, the electronic device 100 may operate in various modes. For instance, the electronic device 100 can operate in a standalone mode independent of any base device. When the electronic device 100 operates in the standalone mode, operations of the device may be constrained by power limitations, such as available battery power of the device.

The electronic device 100 may also operate in a wireless tethered mode (e.g., connected via a wireless connection with a base device), working in conjunction with a given base device. The electronic device 100 may also work in a connected mode where the electronic device 100 is physically connected to a base device (e.g., via a cable or some other physical connector) and may utilize power resources provided by the base device (e.g., where the base device is charging the electronic device 100 and/or providing power to the electronic device 100 while physically connected).

When the electronic device 100 operates in the wireless tethered mode or the connected mode, a least a portion of processing user inputs and/or rendering the extended reality environment may be offloaded to the base device thereby reducing processing burdens on the electronic device 100. For instance, in an implementation, the electronic device 100 works in conjunction with a companion device to generate an extended reality environment including physical and/or virtual objects that enables different forms of interaction (e.g., visual, auditory, and/or physical or tactile interaction) between the user and the extended reality environment in a real-time manner. In an example, the electronic device 100 provides a rendering of virtual content that is overlaid on a direct view of a physical scene, in which some or all of the virtual content can be perceived by the user and interacted with in a real-time manner. Additionally, as part of presenting the rendered scene, the electronic device 100 may provide sound, and/or haptic or tactile feedback to the user.

The electronic device 100 may also detect events that have occurred within the scene of the extended reality environment. Examples of such events include detecting a presence of a particular person, entity, or object in the scene. Detected physical objects may be classified by electronic device 100, and the location, position, size, dimensions, shape, and/or other characteristics of the physical objects can be used to coordinate the rendering of virtual content, such as content provided by an application, for display within the XR environment.

In one or more implementations, the electronic device 100 may be connected to, or connectable to, a network. The network may communicatively (directly or indirectly) couple, for example, the electronic device 100 with a base device, one or more other devices of a user of the electronic device 100, one or more servers, and/or one or more electronic devices of one or more other users. In one or more implementations, the network may be an interconnected network of devices that may include, or may be communicatively coupled to, the Internet.

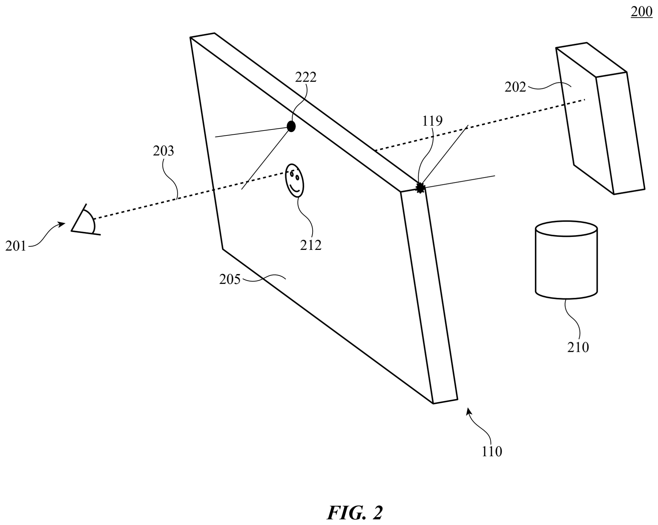

FIG. 2 illustrates an example physical environment of an electronic device 100, in which the electronic device 100 is implemented as an optical see-through (OST) augmented reality (AR) device. In the example of FIG. 2, a physical environment 200 of the electronic device 100 includes a physical object 202 and a physical object 210. As shown in FIG. 2, an eye 201 of a user can have a line of sight 203 that passes through a transparent portion 205 of the display system 110 of the electronic device 100.

In one or more implementations, the electronic device 100 may obtain a gaze location and/or a gaze direction of the eyes 201 of a user (e.g., by determining a line of sight 203 corresponding to a gaze direction for one or both eyes of the user, and/or a gaze plane corresponding to a vergence location for the gaze directions of the users eyes) using sensor information from at least one eye sensor such as eye sensor 222 (e.g., an eye tracking sensor that includes a light source and/or a camera for each eye of the user).

In some examples, the transparent portion 205 may be a transparent display having display pixels that can be activated and controlled to display virtual content, such as virtual content 212, such that the virtual content appears to be a part of the physical environment 200. As another example, the transparent portion 205 may be a transparent lens or a pair of transparent lenses onto which the virtual content can be projected such that the virtual content appears to be a part of the physical environment 200. By displaying or projecting the virtual content 212 separately for each eye of a user, the apparent depth of the virtual content 212 in the physical environment 200 can also be controlled.

In the example of FIG. 2, the line of sight 203 intersects with the physical object 202, and the virtual content 212 is displayed or projected at least partially within the user's line of sight. In this example, the physical object 210 would also be visible to the user through the transparent portion 205 of the display system 110 (e.g., in the peripheral portion of the user's vision) even though the user's gaze is directed toward the physical object 202. In this way, the electronic device 100 can generate an augmented reality or mixed reality experience for the user of the electronic device.

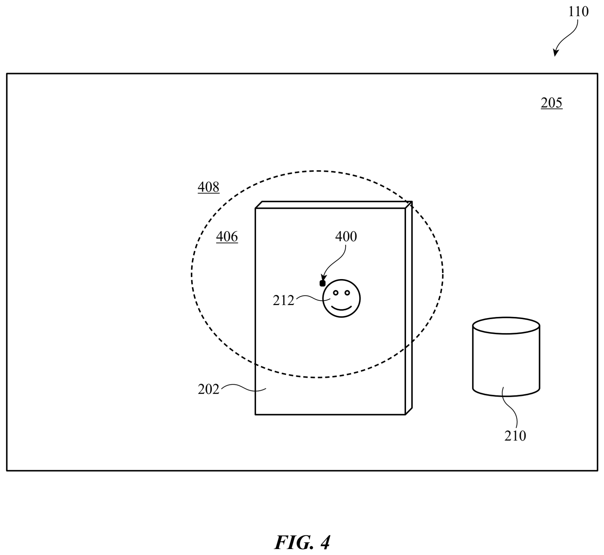

In the example of FIGS. 2 and 4, a single instance of virtual content 212 is displayed over the view of the physical environment. However, it is appreciated that, in one or more use cases, the virtual content 212 may be displayed at a first location by the display system 110 while other virtual content (e.g., system content and/or display content from one or more other applications) is concurrently displayed at other locations by the display system 110.

Display content, such as virtual content 212 may include color content. For example, applications and/or system processes at the electronic device 100 may generate color display content to be displayed to appear to a user of the electronic device 100 with one or more predetermined colors. In conventional devices in which the (e.g., opaque) display blocks the user's view of the physical environment behind the display, the display pixels of the display typically include display pixels of various colors that are operated to display those predetermined colors, and the predetermined colors are typically perceived as such by the user. However, in the example of FIG. 2, the color(s) of the virtual content 212 are overlaid on the physical object 202, which may have color(s) of its own. The displayed color(s) of the virtual content 212 therefore combine with the color(s) of the physical object 202, which results in the user perceiving a color of the virtual content 212 that is different from the color (e.g., the intended perceived color) that is displayed by the display system 110. Accordingly, the electronic device 100 may perform a color correction operation to modify the color(s) of the virtual content 212 such that the displayed color(s) of the virtual content 212, combined with the color(s) of the physical object 202, result in the predetermined color as desired by the provider (e.g., applications and/or system processes) being the perceived color of the virtual content 212. For example, the camera 119, and/or other cameras of the electronic device 100, may be used to capture images of the physical environment 200 to obtain color information for the physical objects therein (e.g., including the physical object 202 in FIG. 2). The color information obtained from the captured images can then be used to perform the color correction for the virtual content 212.

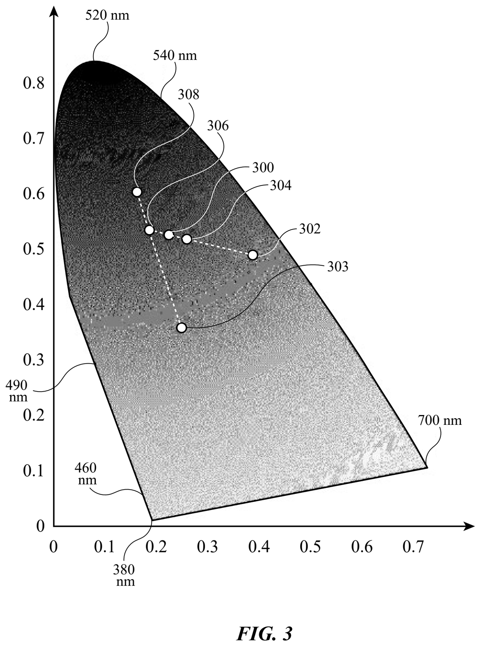

For example, FIG. 3 shows a chromaticity diagram illustrating an example color correction that may be applied to display content, such as the virtual content 212, based on physical environment colors determined using one or more images from the camera(s) 119. The chromaticity diagram of FIG. 3 indicates a relationship between wavelength values (in the electromagnetic visible spectrum) and perceived colors in human color vision. For example, the chromaticity diagram may represent the International Commission on Illumination (CIE) 1931 xy chromaticity space. Various wavelength values are indicated in the chromaticity diagram of FIG. 3, including 520 nm, 700 nm, 380 nm, etc. An achromatic point 303 in the xy chromaticity space is illustrated for reference. Changing the colors of displayed content (e.g., by modifying which and how much of various color display pixels, such as red, green, and blue display pixels, used to display the virtual content) changes the location of the chromaticity of that displayed content within the chromaticity diagram.

In the example of FIG. 3, the chromaticity 300 of the virtual content 212 is shown. The chromaticity 300 represents the intended, predetermined perceived colors of the virtual content 212 (e.g., as generated by an application and/or system process at the electronic device 100). However, when the virtual content 212 with the chromaticity 300 is displayed over the physical object 202 having its own background chromaticity 302, the resulting perceived chromaticity 304 is different from the original, intended chromaticity 300. This difference represents an inaccurate representation of the color of the virtual content 212.

By obtaining one or more images of the physical object 202 (e.g., and/or any other portions of the physical environment over which the virtual content 212 is displayed), the chromaticity 302 of the background (e.g., the physical object 202) can be determined (e.g., by determining the colors of the image pixels, in the image(s), that correspond to the physical locations over which the virtual content is to be displayed/projected), and used to generate a corrected chromaticity 306 for the displayed virtual content 212. When the virtual content 212 is displayed with the corrected chromaticity 306 (which is different from the chromaticity 300 with which the virtual content was provided from its source) over the physical background with the background chromaticity 302, the resulting perceived chromaticity may be the original, intended chromaticity 300. In this way, background color information for the physical environment can be used to perform a color correction for virtual content 212 prior to display of the virtual content 212.

The chromaticity diagram of FIG. 3 also illustrates a chromaticity boost that can be applied to the virtual content 212 to provide a corrected-boosted chromaticity 308 that may enhance the vividness of the displayed virtual content 212. The color correction from the original chromaticity 300 to the corrected chromaticity 306, and/or the chroma boost from the corrected chromaticity 306 to the corrected-boosted chromaticity 308, may be based on the color information obtained from the image(s) of the physical environment 200 from camera(s) 119.

In order to perform the color correction for the virtual content 212, the electronic device 100 may determine, based on the image(s) from the camera 119, one or more chromaticity values, such as a combination of a hue value, a chroma value, and/or a saturation value associated with various locations in the physical environment. The one or more chromaticity values may provide an objective specification of the colorfulness of the physical environment, irrespective of the luminance (e.g., intensity or brightness). The electronic device 100 may also determine, based on the image(s) from the camera 119, luminance values associated with the various locations in the physical environment.

In one or more implementations, performing the color correction may include performing a chromatic adaptation transform (CAT), a transparency model correction, and/or a chroma boost. For example, the CAT may account for (e.g., simulate) a human visual system's ability to adjust to changes in illumination in order to preserve the appearance of object colors. For example, the transparency model may map perceived transparency to background luminance (e.g., brightness) and a gamut associated with the transparent portion 205 of the display system and/or the background in the physical environment.

For example, the color correction may be applied to the virtual content 212 such that the virtual content satisfies a color constancy threshold indicated by the CAT. In some implementations, the CAT includes a combination of linear and non-linear components. For example, in some implementations, the CAT corresponds to or is based on a Von Kries chromatic adaptation, Retinex theory, Nayantani et al. model, MacAdam's model, etc. In some implementations, the CAT may be based on a color appearance model. The color appearance model provides perceptual aspects of human color vision, such as the extent to which viewing conditions of a color diverge from the corresponding physical measurement of the stimulus source. For example, the color appearance model may be associated with a CIELAB color space. The color appearance model may account for certain human responses that may result from the viewing of certain colors and/or objects, such as memory-colored objects (e.g., a fire truck is red).

In one or more implementations, the transparency model may model a visual system's perception of semi-transparent display content, based on the chromaticity values and/or luminance values of the physical environment. For example, the electronic device may determine a perceived color of the virtual content 212 by applying the transparency model to the chromaticity values and/or luminance values of the physical environment, and corresponding values of the virtual content 212. For example, the electronic device may modify a hue, chroma, or saturation of the virtual content 212 in order to offset the perceived color (e.g., at perceived chromaticity 304 of FIG. 3) of the virtual content 212 .

In some implementations, in order to determine the perceived color of the virtual content 212, the transparency model may use a weighted sum of a respective color characteristics of the virtual content 212 and the physical environment 200 (e.g., the physical object 202). For example, the transparency model may correspond to a Metelli Model or a Scission-based model. In one or more implementations, transparency model may perform the weighted sum on the luminance (brightness) axis, in isoluminant space, or in a three-dimensional (3D) color space.

In one or more implementations, the transparency model may be a filter-based model that accounts for additive color mixing and subtractive color mixing. For example, the transparency model may be used to determine the perceived color of the virtual content 212 by treating a color characteristic (e.g., chroma or saturation) associated with the virtual content 212 as a neutral or color filter.

In some implementations, the transparency model indicates a change in the perceived chroma or saturation of the virtual content 212 based on a function of a luminance of the physical background. In some implementations, the transparency model indicates a hue shift of the virtual content 212 based on a chromaticity of the physical background. For example, the chromaticity value of the background and a respective chromaticity value of the virtual content 212 may together satisfy a color contrast criterion, such as by being on opposite sides of the color wheel. Accordingly, the color correction may shift the hue of the virtual content 212 in order to offset a hue shift caused by overlay on the physical background.

In some implementations, the color correction may include a chroma modification. The chroma modification may modify (e.g., boost or reduce) a first chroma value, which is associated with the virtual content 212, to a second chroma value based on the luminance and/or chromaticity of the physical background and a color characteristic vector associated with the virtual content 212. For example, the color characteristic vector may include a combination of the first chroma value associated with the virtual content 212 and a first hue value associated with the virtual content 212 . In some implementations, the chroma modification boosts the virtual content 212 further based on a color appearance model. Accordingly, display of the boosted-corrected version of the virtual content 212 over the physical environment appears more vivid than display of color-corrected version of the virtual content 212 over the physical background.

As discussed herein, color corrections may be made to virtual content 212 based on the color information (e.g., one or more colors, chromaticities, etc.) of the physical background over which the virtual content 212 is to be displayed/projected, and the physical background color information may be determined based on image(s) and/or other sensor data captured by the camera(s) 119 and/or other sensor of the electronic device 100. However, because, for example, of form-factor constraints (e.g., including comfort, weight, and/or size) of electronic devices that provide AR and/or MR experiences (e.g., OST-AR devices), memory, compute, and power of the devices may be constrained. Further, AR and/or MR experiences can be highly sensitive to latency. These constraints create unique challenges in designing sensors, compute hardware, and algorithms with minimal size, including for processes for obtaining physical background color information and performing color corrections based on that obtained physical background color information.

In accordance with aspects of the subject disclosure, operation of the camera(s) 119 and/or other sensors may be controlled and/or adjusted for efficient capture of the physical background colors to be used for color correction. For example, conventional imaging devices capture rectangular images with a uniform resolution (pixel density) across the entire field of view, which can be a power hungry process. However, the human visual system is highly sensitive to color in the foveal region, and less sensitive to color in the peripheral vision regions.

For example, FIG. 4 illustrates a face-on view of the transparent portion 205 of the display system 110 of FIG. 2, in which the virtual content 212 is displayed/projected by/on the transparent portion 205 in such a way as to appear overlaid on the physical object 202 (e.g., in an XR environment, such as an MR or AR environment). In this example, a gaze location 400 of the user (e.g., the intersection of the line of sight 203 of FIG. 2 with the transparent portion 205, or a vergence or focus location of the user's gaze) is shown. For example, the gaze location 400 may be determined using the eye sensor 222 of FIG. 2. In one or more implementations, an active depth sensor or stereo depth operation may be used in combination with the eye sensor 222 to identify a particular physical or virtual object on which a user's gaze is fixated. In some implementations vergence of the user's two eyes may be used to determine a gaze location.

As discussed herein, the human visual system may be more sensitive to color in the central region (e.g., a foveal region 406) around the gaze location 400, than in the peripheral region 408. Accordingly, the electronic device 100 may obtain reduced color information from the peripheral region 408 than from the foveal region 406, for use in the color correction operation for the virtual content 212. As one example, camera(s) 119 may obtain foveated images having a first (e.g., high) pixel density around the gaze location 400 (e.g., in the foveal region 406) and a second, relatively lower, pixel density in the peripheral region 408. Using this reduced-resolution color information in the peripheral region 408 may result in a lower quality color correction in that region. However, because the human visual system is less sensitive to color in the peripheral region 408, this reduction in color correction quality may not be noticeable to the user, and/or may be outweighed by the improvement in efficiency of the color correction operation (e.g., including using less power to capture the image(s) and/or less power to perform the color correction).

As examples, foveation may be performed at the image sensor itself by reading out only a subset of the sensor pixels of a pixel array of the image sensor, by binning of pixel values within the pixel array (e.g., prior to readout of the sensor pixels), and/or binning of analog pixel values by analog-to-digital (ADC) readout circuitry and/or digital binning of digital pixel values at the image sensor and/or in an image signal processor (ISP). As examples, foveated readout of a pixel array may result in efficiencies including (i) fewer pixels to read out, (ii) an increased readout speed (e.g., which may reduce rolling shutter artifacts and/or increase the frame rate), (ii) fewer pixels to process in in a color correction operation, (iv) lowering a link rate for interface between the image sensor and a host processor, and/or (v) reducing electromagnetic interference (EMI), without affecting the color correction in a way that is noticeable or distracting to the user.

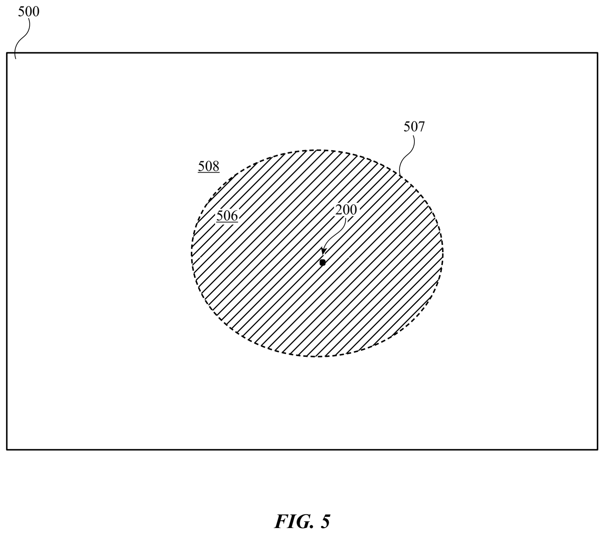

For example, FIG. 5 illustrates an example of a foveated image frame 500 that may captured by an image sensor of a camera, such as a camera 119, of the electronic device 100. In the example of FIG. 5, an image frame 500 has been generated with a foveation pattern that is based on the gaze location 400 of FIG. 4. In this example, the image frame 500 is a foveated image frame that has a first portion (e.g., a foveal region 506 spatially corresponding to the foveal region 406 of FIG. 4) having a first pixel resolution, and a second portion (e.g., a peripheral region 508 spatially corresponding to the peripheral region 408 of FIG. 4) having a second pixel resolution lower than the first pixel resolution. In some implementations, vergence of the user's two eyes may be used to determine an initial or default size and/or location of foveal region 506, and the size and/or other aspects of the foveal region may be adaptively modified as discussed herein.

In the example of FIG. 5, the image frame 500 may have a total number of image pixels that is equal to the number of sensor pixels in a pixel array of an image sensor that captured the image frame. However, the peripheral region 508 may include repeated values obtained from only a subset of the sensor pixels of the pixel array that are located in a portion of the pixel array corresponding to the peripheral region 508. For example, in order to generate the image frame 500, a subset of the sensor pixels of the pixel array may be read out, and then some of those sensor pixel values may be repeated (e.g., in the peripheral vision) in multiple image pixels to form the image frame 500. Reading out the subset of the sensor pixels may include skipping readout of some of the sensor pixels, may include binning two or more of the sensor pixels within the pixel array prior to readout, and/or binning pixel values during analog-to-digital conversion by the image sensor.

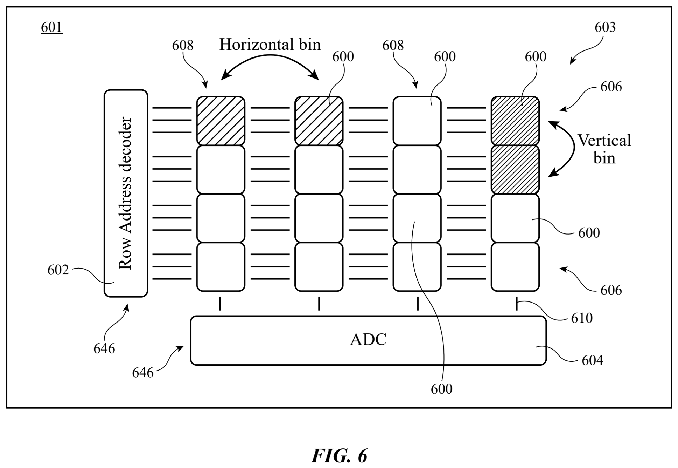

For example, FIG. 6 illustrates an example of an image sensor 601 having an array 603 of sensor pixels 600, and readout circuitry 646 including a row address decoder 602 and analog-to-digital (ADC) circuitry 604. As shown, the sensor pixels 600 may be arranged in rows 606 and columns 608 of sensor pixels 600. The example of FIG. 6 illustrates a four-pixel by four-pixel array; however, this is merely illustrative and arrays of sensor pixels may include many more rows and columns (e.g., tens, hundreds, or thousands of rows and columns of tens, hundreds, thousands, millions, or billions or sensor pixels). During operation of the image sensor 601, the row address decoder 602 may address one or more rows 606 of the sensor pixels 600 at a time for readout along data lines 610 to the ADC circuitry 604.

As indicated in FIG. 6, in a foveated readout of the sensor pixels 600 of the array 603, the sensor information (e.g., charge or voltage) captured by two or more of the sensor pixels 600 may be binned (e.g., combined, such as averaged or summed) within the array 603 (e.g., prior to readout by the ADC circuitry 604), such as in a horizontal dimension (e.g., along a row 606) and/or a vertical dimension (e.g., along a column 608) of the array 603. In this way, rather than reading out and processing each sensor pixel 600 by the ADC circuitry 604, a reduced number of binned values may be read out and processed by the ADC circuitry 604 in some regions of the array, such as regions away from determined gaze location. As discussed in further detail hereinafter, after binning and readout, additional binning (e.g., of binned values previously binned within the pixel array) may also be performed by the ADC circuitry 604 (e.g., to further reduce the resolution and number of pixel values for transmission and digital processing), and/or subsequent processing circuitry (e.g., an ISP).

In one example binning operation, sensor information from a first sensor pixel 600 and a second sensor pixel 600 may be binned, (e.g., in a vertical direction along a column of the array 603 or in a horizontal direction along a row of the array 603), by combining the sensor information of the first sensor pixel and the second sensor pixel in a single floating diffusion region within the array 603 of sensor pixels 600. For example, the sensor information (e.g., charge) accumulated by a sensor element (e.g., a photodiode) of one sensor pixel 600 and sensor information (e.g., charge) accumulated by a sensor element (e.g., a photodiode) of another sensor pixel 600 may be combined in one floating diffusion region prior to the combined charge in the floating diffusion region being read out along a data line 610 by the ADC circuitry 604. In this example, sensor information from two sensor elements are combined into a single floating diffusion region. However, in other implementations, sensor information (e.g., charge) accumulated by two, three, four, or more than four of the sensor elements of the sensor pixels 600 may be combined in a single floating diffusion region, prior to the combined charge in the floating diffusion region being read out along a data line 610 by the ADC circuitry 604.

In another example binning operation, sensor information from a first sensor pixel (e.g., a first one of the sensor pixels 600) and a second sensor pixel (e.g., a second one of the sensor pixels 600) may be binned, (e.g., in a vertical direction along a column of the array 603 or in a horizontal direction along a row of the array 603), by shorting together (e.g., using a switch and/or one or more source follower transistors) a sensor element (e.g., a photodiode) of the first sensor pixel with a sensor element (e.g., a photodiode) of the second sensor pixel prior to the sensor elements being read out along a data line 610 coupled to the shorted sensor elements. In one or more implementations the sensor elements of the sensor pixels 600 may have associated respective color filter elements. Binning of sensor information captured by the sensor pixels 600 may be performed by binning the sensor information from sensor pixels 600 (or sub-pixels thereof) having the same color (e.g., sensor pixels that are covered by color filter elements of the same color).

In the example of FIG. 6, foveated operations of an image sensor 601 (e.g., an image sensor of a camera such as camera 119), may be used to capture foveated images for background color correction. In these examples, the image sensor of the camera 119 may have a sensor pixel array 603 with a uniform pixel density, and the pixel readout may be performed such that a high pixel resolution region-of-interest (ROI) is read from the region where the gaze location 400 is fixated and a lower resolution ROI is read from the rest of the regions from the sensor array. In one or more other implementations, one or more of the camera(s) 119 may be movable or actuatable. For example, one or more of the camera(s) 119 may be implemented as pan-tilt cameras that can pan and/or tilt to move the field of view of the camera. In one or more implementations, a pan-tilt camera with a foveated pattern of sensor pixels at the center of the field of view (FOV) of the camera may be moved in accordance with the motion of the user's eyes to mimic the performance of human eye. In this example implementation, the FOV of the camera may track the FOV of the eye using a gaze vector (e.g., corresponding to the line of sight 203 of FIG. 2 and the gaze location 400 of FIGS. 4 and 5) estimated using a system (e.g., eye sensor 222) that tracks the gaze vector.

In one or more implementations (e.g., with a fixed-position or pan-tilt camera), the density of red, green and blue pixel elements (e.g., of sensor pixels 600) in the image sensor of a camera 119 may match the density of the three cones (e.g., long, medium and short) in the typical human retina. Matching the density of red, green and blue pixel elements to the cone density of the human retina may be implemented using analog binning in the image sensor (e.g., as discussed in connection with FIG. 6) and/or digital binning in an image sensor processor (ISP).

In one or more implementations (e.g., with a fixed or pan-tilt camera), a hexagonal image sensor array may be used in one or more of the camera(s) 119 to more accurately mimic the human retina (e.g., so that the color pixel elements in the sensor array match with the spatial arrangement of the three cone cells in the human retina). For example, in the human retina, the three cone cells are arranged approximately in a 2D array of hexagons, and the sensor pixels of the image sensor may be arranged in a similar manner. In various implementations in which a hexagonal image sensor is not available, a rectangular image sensor array may be used and sensor readout and/or digital processing after readout may be used to convert a rectangular image to a hexagonal image for in the background color correction operations.

In the examples of FIGS. 5 and 6, a single gaze location is described for determining how to control the sensor pixels 600 of an image sensor 601 to obtain an image frame with higher resolution in the foveal region 506 and lower resolution in the peripheral region 508. However, it is appreciated that, as the gaze location 400 moves when the user moves their eyes and/or changes their focus, the electronic device 100 may track and update the locations the foveal region 506 and the peripheral region 508 of the image frames (e.g., by tracking and updating the locations of the corresponding portions of a sensor pixel array, such as the array 603 of FIG. 6), so that the foveal region 506 remains substantially centered on the gaze location 400.

In the example of FIG. 5, a boundary 507 between the foveal region 506 and the peripheral region 508 is indicated by a dashed line. However, this is merely for ease of understanding and it is appreciated that the boundary 507 between the foveal region 506 (e.g., the high resolution portion) and the peripheral region 508 (e.g., the low resolution portion) of the image frame 500 may be not be displayed, and may be constructed so as to be imperceptible by the user. Moreover, the boundary 507 is depicted as a rounded boundary, but may be implemented with other forms and/or shapes (e.g., a rectilinear shape, such as a symmetric rectilinear shape or an asymmetric rectilinear shape) in various implementations. Moreover, the size and/or shape of the boundary 507, and/or other aspects of the foveation pattern and/or imaging may be adaptively adjusted for additional color correction efficiency based on one or more features of the virtual content and/or physical environment, as discussed in further detail hereinafter.

For example, obtaining foveated image data as discussed in connection with FIGS. 5 and 6 can improve the efficiency of obtaining and processing physical background color information for a color correction operation for virtual content to be overlaid on the physical background. However, depending on the virtual content to be displayed and/or one or more characteristics of the physical background, further efficiencies may be realized by adjusting the size and/or shape of the foveal region 506, adjusting the resolution of the foveal region, adjusting frame rates, adjusting color patterns, and/or adjusting other features of the image frames to be used for color correction.

For example, the resolution of the foveal region 506 and/or the resolution of the peripheral region 508 may also be varied as a function of distance from the gaze location 400 and/or as a function of the displayed content. In one or more implementations, the rate at which the resolution varies may be based on virtual content information for the virtual content 212 and/or physical environment information for the physical environment. Further, although the foveated image frame of FIG. 5 includes the foveal region and the peripheral region 508 having first and second respective resolutions, a foveated image frame may have any number of regions and/or subregions (e.g., also referred to herein as regions of interest (ROIs)) with different resolutions, and/or any number of boundaries therebetween. In one or more implementations, number and/or distribution of regions in the image frame may be based on virtual content information for the virtual content 212 and/or physical environment information for the physical environment.

In this way, foveated image frames with adaptively variable resolution and foveated region size are described as examples of ways in which the capture of physical environment color information to be used for color correction operations for display content can be obtained efficiently. However, other examples of adaptive modifications (e.g., based on virtual content information and/or physical background information) of the capture of physical environment color information are also described herein.

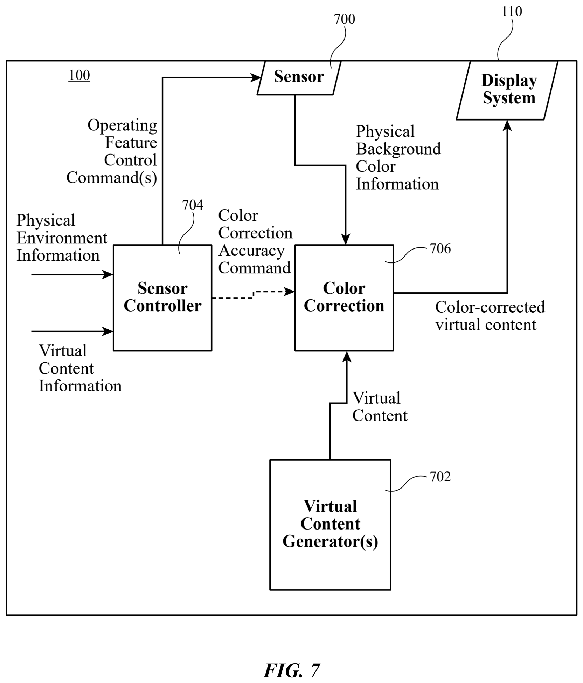

FIG. 7 illustrates an example architecture that may be implemented by an electronic device in accordance with one or more implementations of the subject technology. For explanatory purposes, portions of the architecture of FIG. 7 are described as being implemented by the electronic device 100 of FIG. 1, such as by one or more processors and/or memory of the electronic device; however, appropriate portions of the architecture may be implemented by any other wearable electronic device. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

In the example of FIG. 7, the electronic device 100 includes a sensor 700 (e.g., an image sensor 601 of a camera 119 and/or another environmental sensor), the display system 110, one or more virtual content generators 702 (e.g., application(s) and/or the system process(es) that generate display content for display), a sensor controller 704, and a color correction block 706. Various portions of the architecture of FIG. 7 can be implemented in software, firmware, and/or hardware, including by one or more processors and a memory device containing instructions, which when executed by the processor cause the processor to perform the operations described herein. For example, in FIG. 7, the trapezoidal boxes indicate that the sensor 700 and the display system 110 may be hardware components, and the rectangular boxes indicate that the virtual content generators 702, the sensor controller 704, and the color correction block 706 may be implemented in software or hardware, including by execution of instructions by one or more processors and a memory device containing the instructions, which when executed by the processor cause the processor to perform the operations described herein.

In the example of FIG. 7, one or more virtual content generators 702 generate virtual content (e.g., display content, such as virtual content 212 of FIGS. 2 and 4) to be displayed by the display system 110. For example, the virtual content generators 702 may include applications and/or system processes running at the electronic device 100. As shown, the virtual content may be provided to a color correction block 706.

As shown, a sensor controller 704 at the electronic device 100 may receive physical environment information and/or virtual content information. For example, the physical environment information may include physical characteristic information for one or more portions of the physical environment 200 of the electronic device, including physical objects 202 and/or 210, and/or other background objects and/or surfaces. As examples, the physical environment information may include one or more colors of the physical environment, a type of an object in the physical environment, a motion of the object, and/or a visual complexity (e.g., one or more values indicating an amount of variation in the color and/or brightness of the physical environment) of the physical environment. The physical environment information may include information that describes the portion of the physical environment that is currently in the user's field of view, and/or portions of the physical environment that were recently in the user's field of view (e.g., to allow the sensor controller 704 and/or the color correction block 706 to account for the effect on the user's perception of one or more colors recently viewed by the user).

The virtual content information may include information describing the virtual content (e.g., virtual content 212) to be presented by the display system 110. As examples, the virtual content information may include one or more colors of the virtual content and/or a type of the virtual content (e.g., a text content type, an image type, or a memory-colored content type). For example, a text content type may indicate that the virtual content provided by the virtual content generator(s) 702 includes text. For example, an image type may indicate that the virtual content provided by the virtual content generator(s) 702 may include an image (e.g., two-dimensional or three-dimensional representation of a user interface, a user interface element, a character, or other computer-generated object). For example, a memory-colored content type may indicate that the virtual content provided by the virtual content generator(s) 702 may include one or more virtual objects for which humans commonly associate a characteristic color that influences the person's perception of the color of that object (e.g., fire engines are typically red, and bananas are typically yellow). The virtual content information may include information that describes the virtual content currently displayed and or imminently to be displayed, and/or virtual content recently in the user's field of view (e.g., to allow the sensor controller 704 and/or the color correction block 706 to account for the effect on the user's perception of one or more colors recently viewed by the user).

In one or more implementations, the virtual content information may be provided to the sensor controller 704 by the virtual content generator(s) 702 and/or by a system process that receives the virtual content information from the virtual content generator(s) 702. In one or more implementations, the physical environment information be obtained from a previously captured (e.g., initial) image (e.g., captured using the sensor 700) of the physical environment.

As shown, the sensor controller 704 may generate, based on the physical environment information and/or the virtual content information, one or more commands (e.g., operating feature control commands), and may provide the one or more commands to the sensor 700. The sensor 700 may then obtain sensor data (e.g., may capture one or more images using camera(s) 119 and/or obtain other sensor data) according to the operating feature control command(s). In one or more implementations, the command may set (e.g., based on the virtual content information and/or the physical environment information) a pixel resolution (e.g., in ppd), a frame rate, and/or a color pixel distribution for the foveal region 506 and/or the peripheral region 508. In this example, the command may cause the sensor 700 to increase the pixel resolution, frame rate, and/or color information in the foveal region 506 of the captured images when the physical environment information indicates a high visual complexity of the physical environment, and/or when the virtual content information indicates that an image object type and/or a memory-colored object type is to be presented by the display system 110. As another example, the command may cause the sensor 700 to decrease the pixel resolution, frame rate, and/or color information in the foveal region 506 of the captured images when the physical environment information indicates a low visual complexity of the physical environment, and/or when the virtual content information indicates that a text object type is to be presented by the display system 110.

In one or more implementations, the command may set (e.g., based on the virtual content information and/or the physical environment information) the size and/or shape of the foveal region 506 (e.g., the size and/or shape of the boundary 507). For example, the command may cause sensor 700 to increase the size of a foveal region 506 of a captured image (e.g., to as large as the entire image frame in some use cases) when the physical environment information indicates a high visual complexity of the physical environment, and/or when the virtual content information indicates that an image object type and/or a memory-colored object is to be presented by the display system 110. As another example, the command may cause the sensor 700 to decrease the size of the foveal region 506 (e.g., to or approximately to the size of the virtual content) of a captured image when the physical environment information indicates a low visual complexity of the physical environment, and/or when the virtual content information indicates that the text object type is to be presented by the display system 110.

In one or more implementations, the command (e.g., that is based on the virtual content information and/or the physical environment information) may set a binning style and/or an amount of binning (e.g., bin2, bin4, etc.) for binning pixel values in the peripheral region 508. For example, pixels may be binned in the analog domain or digital domain (e.g., in the sensor or in the ISP) such that the output pixel density varies spatially to generate a foveated image frame 500 as described in connection with FIG. 5. For example, binning styles that may be set by the command may include an analog binning style (e.g., binning within the image sensor prior to readout as described in connection with FIG. 6), an in-sensor digital binning style (e.g., binning digital pixel values during or after readout from the image sensor), and/or an image signal processor (ISP) binning style (e.g., binning digital pixel values at the ISP after receipt from the image sensor). In one or more implementations, the analog binning style may include two or more binning sub-styles, including floating diffusion binning and/or source follower binning (e.g., shorting), as discussed herein in connection with FIG. 6.

The sensor controller 704 may generate the command to switch the sensor 700 between binning styles based on the virtual content information and/or the physical environment information. For example, the command from the sensor controller 704 may instruct the sensor 700 to use the analog binning mode (e.g., for lowest quality at a lowest power cost) when the virtual content includes text (e.g., black and white text) and/or the physical environment information indicates a white, black, or other monochrome or achromatic (e.g., or other low visual complexity) background and/or a neutral (e.g., white or D65) lighting condition. As another example, the command from the sensor controller 704 may instruct the sensor 700 to use the ISP binning mode (e.g., for higher quality at a higher power cost) when the virtual content includes an image and/or a memory-colored object and/or the physical environment information indicates visually complex (e.g., including variable colors) background and/or a colored (e.g., yellow, red, or blue) lighting condition. As another example, the command from the sensor controller 704 may instruct the sensor 700 to switch between the floating diffusion region binning (e.g., for higher color correction accuracy at a higher power cost) and the source-follower binning (e.g., for lower color correction accuracy at a lower power cost).

In one or more implementations, the command may set (e.g., based on the virtual content information and/or the physical environment information) a rate of change in the resolution (e.g., in ppd) from the foveal region 506 to the peripheral region 508. For example, command may cause the resolution to change more slowly for image content and/or memory colored content and/or for visually complex physical backgrounds, and/or to change more quickly for text content and/or visually simple physical backgrounds.

In one or more implementations, the command may set (e.g., based on the virtual content information and/or the physical environment information) a (e.g., foveated) frame rate (e.g., in frames-per-second (fps)), such as by setting a higher frame rate for sensor pixels in the foveal region 506 and a relatively lower frame rate for sensor pixels in the peripheral region 508.

In one or more implementations, the command may set (e.g., based on the virtual content information and/or the physical environment information) one or more image fidelity parameters, such as by controlling the sensor 700 to capture high fidelity frames at a low frame rate and low fidelity frames at a relatively higher frame rate (e.g., across the entire sensor pixel array or in various regions of the sensor pixel array). For example, the color correction block 706 may use intermittent high fidelity frames to interpolate between values of more frequent low fidelity frames to determine the physical background color information for the color correction. In one or more implementations, the command may set (e.g., based on the virtual content information and/or the physical environment information) a color pattern for image capture (e.g., adaptively controlling the sensor 700, based on the virtual content information and/or the physical environment information, for capturing color image frames and monochrome image frames). For example, monochrome image frames may be sufficient for color correction (e.g., using luminance information derived from the monochrome images) when the physical background is white or black, and the ambient lighting is white (e.g., D65). In one or more implementations, the color correction block 706 may use intermittent color frames to interpolate between values of more frequent monochrome frames to determine the physical background color information for the color correction.

In one or more implementations, the command may cause (e.g., based on the virtual content information and/or the physical environment information) a modified (e.g., foveated) image processing at the sensor 700 and/or subsequent image processing circuitry. As examples, the modified image processing may include varying amounts of image enhancement, local tone mapping (LTM), image sampling, color reproduction, white balancing, contrasting, brightness adjustment, sharpening, denoising in the foveal and/or peripheral regions). For example, all of these imaging processing operations may be performed for image content and/or memory-colored content and/or for visually complex physical backgrounds, and/or some or all of these image processing operations may be turned off or bypassed for text content and/or visually simple physical backgrounds.

In one or more implementations, the command may adaptively control (e.g., based on the virtual content information and/or the physical environment information) one or more other forms of adaptive readout (e.g., adaptive binning methods, adaptive gains, adaptive bit depths, etc.). For example, the bit depth of the data from the sensor 700 may be reduced in one or more regions, such as the peripheral region 508, (e.g., from twelve bit to ten bit or eight bit) and/or one or more sensor gains, analog gains, and/or digital gains can be reduced to save power when color correcting text content and/or with visually simple physical backgrounds.

In various implementations, the command may adaptively control (e.g., based on the virtual content information and/or the physical environment information) a sensor operating mode (e.g., a low power vs a high power mode), may control an adaptive use of lateral overflow integration capacitors (LOFICs) such as by using only small charge wells of the LOFIC and foregoing use of larger charge wells of the LOFIC (e.g., for text content and/or visually simple physical backgrounds) , may control adaptive use of single-image flare removal (SIFR) vs bracketed capture, may control adaptive use of exposure time (e.g., by using longer exposure time in the foveal region and shorter exposure times in the peripheral region, and/or by using longer exposure times for image content, memory-colored content, and/or for visually complex physical backgrounds, and using shorter exposure times for text content and/or visually simple physical backgrounds), and/or may control adaptive use of an event-sensing mode (e.g., by using difference images captured in an event sensing mode for text content and/or visually simple physical backgrounds, and by capturing full images for image content, memory-colored content, and/or for visually complex physical backgrounds). In any or all of these examples, the adaptivity may be controlled based on information about the virtual content (e.g., the virtual content 212) to be presented, and/or based on information about the physical environment, to increase data capture and color correction accuracy (e.g., when the virtual content includes image and/or memory-colored data and/or when the physical background is visually complex) and/or to decrease data capture and color correction accuracy (e.g., when the virtual content includes text data and/or when the physical background is visually simple or plain) .

As shown in FIG. 7, physical background color obtained using images captured by the sensor 700 according to the operating feature control command(s) (e.g., commands that are based on the virtual content information and/or the physical environment information) may be provided to the color correction block 706. The color correction block 706 may then apply one or more color correction operations (e.g., CATs, transparency models, and/or chroma boosts) as described herein to the virtual content using the physical background color information. For example, the color correction block 706 may modify the original chromaticity 300 of the virtual content 212 to the corrected chromaticity 306 (e.g., or the corrected-boosted chromaticity 308) in the foveal region 406 of the user's field of view, and modify the original chromaticity 300 of the virtual content 212 to a corrected chromaticity that is near (e.g., but different from, due to the reduced physical background color information obtained in the peripheral region as discussed herein) the corrected chromaticity 306 (e.g., or the corrected-boosted chromaticity 308) in the peripheral region 408 of the user's field of view. Following the color correction, the color correction block 706 may provide the color-corrected virtual content (e.g., and/or boosted-corrected virtual content) to the display system 110 for presentation to the user.

In one or more implementations, irrespective of how the physical background color information was obtained, the color reproduction accuracy of the color correction operations of the color correction block 706 may also be varied spatially such that a higher color-reproduction accuracy operation is performed in the foveal region (e.g., whose size and shape may be adaptively determined based on the virtual content information and/or the physical environment information) and a lower color-reproduction accuracy is performed in the peripheral region. The color-correction accuracy can also be varied temporally, as the virtual content, the user's gaze, and/or the physical environment change over time. For example, in one or more implementations, the sensor controller 704 may provide one or more additional commands (e.g., color-correction accuracy commands) to the color correction block 706 to control the spatial variation of the color-correction accuracy of the color correction operation. The color correction block 706 may perform an adaptive (e.g., foveated) color correction operation that generates a high-accuracy color reproduction (e.g., that moves the chromaticity to within a first range of the corrected chromaticity 306 of FIG. 3) in the foveal region 406 and a relatively lower-accuracy color reproduction (e.g., that moves the chromaticity to within a second range, larger than the first range, of the corrected chromaticity 306 of FIG. 3) in the peripheral region 408 of the user's field of view.

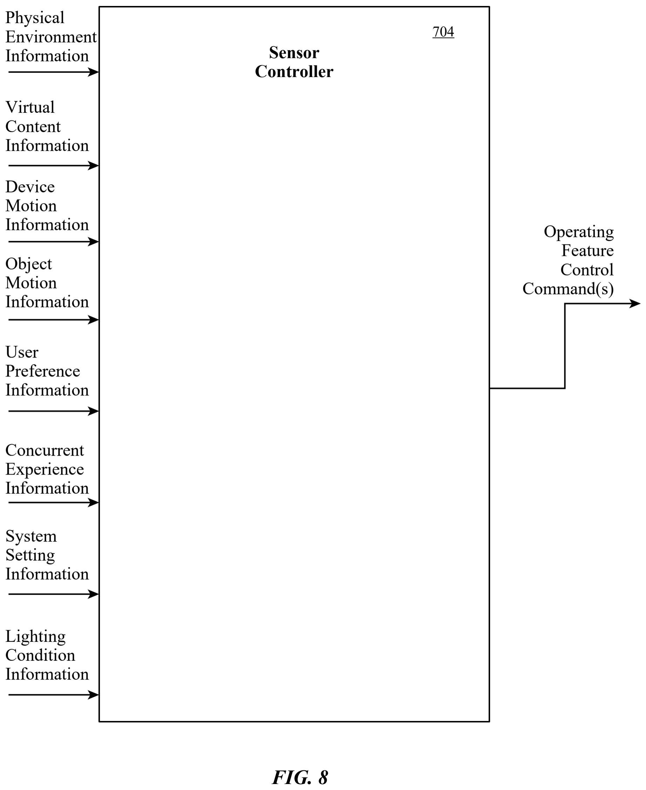

In the example of FIG. 7, the sensor controller 704 generates the command(s) for controlling the sensor 700 and/or the color correction block 706 based on the virtual content information and/or the physical environment information. In one or more implementations, the sensor controller 704 may also generate the command(s) based on additional information. For example, FIG. 8 illustrates an implementation in which the sensor controller 704 receives (e.g., in addition to the physical environment information and/or virtual content information), device motion information (e.g., information indicating the motion of the electronic device 100 in one, two, three, four, five, or six degrees of freedom, where larger device motion causes the sensor controller 704 to capture higher quality physical background color information), object motion information (e.g., information indicating whether and/or how one or more objects in the physical environment are moving, which can cause enhanced color sensitivity of a user on and/or near the moving object, and which may cause the sensor controller 704 to capture higher quality physical background color information), user preference information (e.g., a user preference for accurate color correction, lower dynamic range color correction, and/or temporally-dependent color correction, such as a color correction that is weighted toward bluer colors at night and warmer colors during the day), concurrent experience information (e.g., information indicating one or more applications, user interfaces, and/or computer-generated experiences that are running on the electronic device, some of which may require higher resolution imaging, in which case adaptive imaging for color correction may be turned off or suspended), system setting information (e.g., a system power state, such as a low power state that would cause the sensor controller to favor a smaller foveal region, lower frame rate, etc.), and/or lighting condition information (e.g., lighting conditions of the environment, such as a color, brightness, or chromaticity of the ambient light in the physical environment).

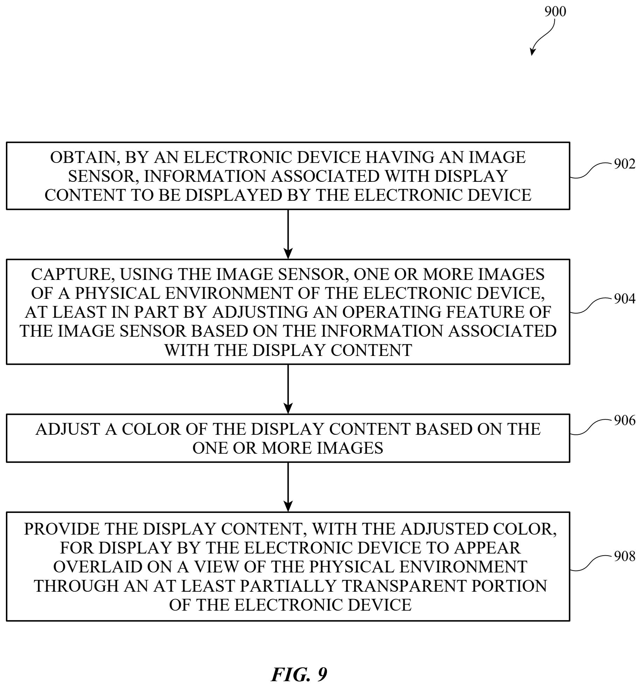

FIG. 9 illustrates an example process 900 for efficient sensor capture for color correction, in accordance with one or more implementations. For explanatory purposes, the process 900 is primarily described herein with reference to the electronic device 100 of FIG. 1. However, the process 900 is not limited to the electronic device 100 of FIG. 1, and one or more blocks (or operations) of the process 900 may be performed by one or more other components of other suitable devices. Further for explanatory purposes, some of the blocks of the process 900 are described herein as occurring in serial, or linearly. However, multiple blocks of the process 900 may occur in parallel. In addition, the blocks of the process 900 need not be performed in the order shown and/or one or more blocks of the process 900 need not be performed and/or can be replaced by other operations.

In the example of FIG. 9, at block 902, an electronic device (e.g., electronic device 100) having an image sensor (e.g., image sensor 601) may obtain information associated with display content (e.g., virtual content 212) to be displayed by the electronic device. As examples, the information associated with the display content may include a color of the display content, a transparency of the display content, or a type of the display content. As examples, the type of the display content may include a text content type, an image content type, or a memory-colored content type.

At block 904, the electronic device may capture, using the image sensor, one or more images of a physical environment of the electronic device, at least in part by adjusting (e.g., with sensor controller 704) an operating feature of the image sensor based on the information associated with the display content. For example, adjusting the operating feature may include setting a first pixel resolution for a first portion of the image sensor (e.g., corresponding to a foveal region of the user's field of view) and a second pixel resolution, different from the first pixel resolution, for a second portion of the image sensor (e.g., corresponding to a peripheral region of the user's field of view). For example, setting the first pixel resolution and the second pixel resolution may include determining a binning style for binning pixel values in the first portion and the second portion of the image sensor. As examples, the binning style may include an analog binning style (e.g., within the image sensor and/or ADC circuitry for the image sensor) or a digital binning style (e.g., by the image sensor and/or by an image signal processor (ISP) or host processor of the electronic device).

As another example, adjusting the operating feature may include setting a first frame rate for a first portion of the image sensor (e.g., corresponding to a foveal region of the user's field of view) and a second frame rate, different from the first frame rate, for a second portion of the image sensor (e.g., corresponding to a peripheral region of the user's field of view). As another example, adjusting the operating feature may include setting a first color capture type (e.g., multi-color capture, such as capture of red, green, and blue pixel values and/or a pixel density of color pixel values) for a first portion of the image sensor and a second color capture type (e.g., monochrome or reduced color pixel values density), different from the first color capture type, for a second portion of the image sensor. As another example, adjusting the operating feature may include adjusting the operating feature based on the information associated with the display content and based on one or more of: a device motion of the electronic device, an object motion of an object in the physical environment, a user preference, background information for the physical environment, concurrent experience information for the electronic device, and/or a system setting for the electronic device.

At block 906, the electronic device (e.g., color correction block 706 of FIG. 7) may adjust a color of the display content based on the one or more images. For example, adjusting the color of the display content may include adjusting a chromaticity of the display content from an original chromaticity (e.g., original chromaticity 300) to a first corrected chromaticity (e.g., corrected chromaticity 306 or corrected-boosted chromaticity 308 of FIG. 3) in a first region (e.g., foveal region 406) of the field of view of a user of the electronic device, and adjusting the chromaticity of the display content from the original chromaticity to a second corrected chromaticity (e.g., a corrected chromaticity that is near, but different from, the corrected chromaticity 306 or corrected-boosted chromaticity 308 of FIG. 3) in a second region (e.g., peripheral region 408) of the field of view of a user of the electronic device.

At block 908, the electronic device may provide the display content, with the adjusted color, for display by the electronic device to appear overlaid on a view of the physical environment through an at least partially transparent portion (e.g., transparent portion 205 of the display system 110) of the electronic device. In one or more implementations, the at least partially transparent portion of the electronic device may include an at least partially transparent display (e.g., with display pixels embedded in a transparent or semi-transparent substrate) that allows the view of the physical environment through the at least partially transparent display. In one or more other implementations, the at least partially transparent portion of the electronic device may include a lens (e.g., a lens mounted in a glasses frame or other housing), and the process 900 may also include displaying the display content, with the adjusted color, to appear overlaid on the view of the physical environment through the at least partially transparent portion of the electronic device by projecting the display content, with the adjusted color, onto the lens.

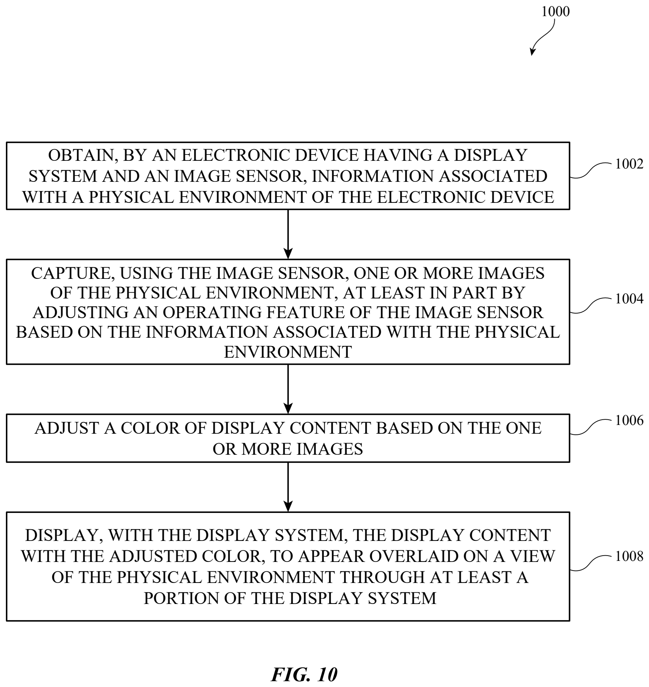

FIG. 10 illustrates another example process 1000 for efficient sensor capture for color correction, in accordance with one or more implementations. For explanatory purposes, the process 1000 is primarily described herein with reference to the electronic device 100 of FIG. 1. However, the process 1000 is not limited to the electronic device 100 of FIG. 1, and one or more blocks (or operations) of the process 1000 may be performed by one or more other components of other suitable devices. Further for explanatory purposes, some of the blocks of the process 1000 are described herein as occurring in serial, or linearly. However, multiple blocks of the process 1000 may occur in parallel. In addition, the blocks of the process 1000 need not be performed in the order shown and/or one or more blocks of the process 1000 need not be performed and/or can be replaced by other operations.

In the example of FIG. 10, at block 1002, an electronic device (e.g., electronic device 100) having a display system (e.g., display system 110) and an image sensor (e.g., image sensor 601) may obtain (e.g., using the image sensor) information associated with a physical environment of the electronic device. As examples, the information associated with the physical environment may include a color of the physical environment, a type of an object in the physical environment, a motion of an object in the physical environment, and/or a visual complexity of the physical environment. In one or more implementations, obtaining the information may include capturing (e.g., with the image sensor), prior to capturing the one or more images, a prior image of the physical environment with the image sensor; and determining the information based on the prior image.

At block 1004, the electronic device may capture, using the image sensor, one or more images of the physical environment, at least in part by adjusting (e.g., with sensor controller 704) an operating feature of the image sensor based on the information associated with the physical environment. As examples, adjusting the operating feature of the image sensor may include adjusting one or more of: a pixel resolution of the image sensor, a frame rate of the image sensor, or a color capture type of the image sensor (e.g., and/or other operating features, as described herein in connection with FIGS. 7 and 8).

At block 1006, the electronic device (e.g., color correction block 706) may adjust a color of display content (e.g., virtual content 212) based on the one or more images. For example, adjusting the color of the display content may include adjusting a chromaticity of the display content from an original chromaticity (e.g., original chromaticity 300) to a first corrected chromaticity (e.g., corrected chromaticity 306 or corrected-boosted chromaticity 308 of FIG. 3) in a first region (e.g., foveal region 406) of the field of view of a user of the electronic device, and adjusting the chromaticity of the display content from the original chromaticity to a second corrected chromaticity (e.g., a corrected chromaticity that is near, but different from, the corrected chromaticity 306 or corrected-boosted chromaticity 308 of FIG. 3) in a second region (e.g., peripheral region 408) of the field of view of a user of the electronic device.

At block 1008, the electronic device may display, with the display system, the display content with the adjusted color, to appear overlaid on a view of the physical environment through at least a portion (e.g., transparent portion 205) of the display system.

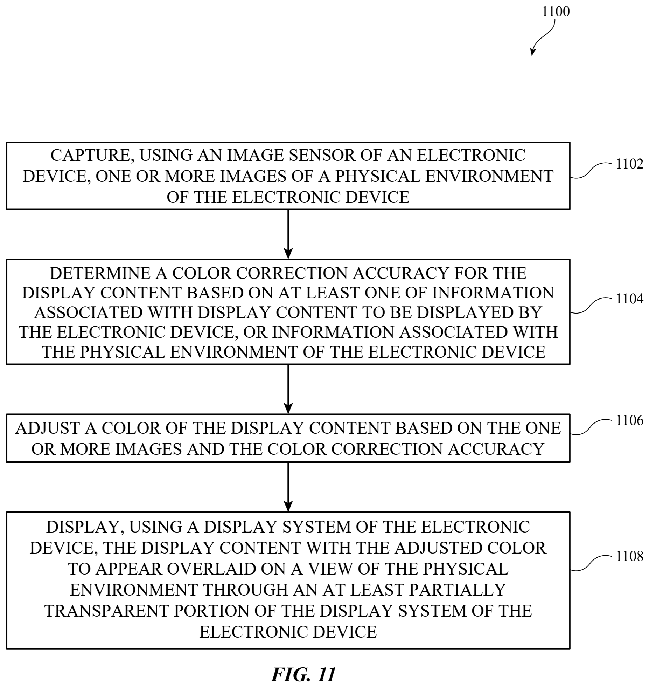

FIG. 11 illustrates another example process 1100 for efficient color correction, in accordance with one or more implementations. For explanatory purposes, the process 1100 is primarily described herein with reference to the electronic device 100 of FIG. 1. However, the process 1100 is not limited to the electronic device 100 of FIG. 1, and one or more blocks (or operations) of the process 1100 may be performed by one or more other components of other suitable devices. Further for explanatory purposes, some of the blocks of the process 1100 are described herein as occurring in serial, or linearly. However, multiple blocks of the process 1100 may occur in parallel. In addition, the blocks of the process 1100 need not be performed in the order shown and/or one or more blocks of the process 1100 need not be performed and/or can be replaced by other operations.

In the example of FIG. 11, at block 1102, an electronic device (e.g., electronic device 100) may capture, using an image sensor (e.g., image sensor 601) of the electronic device, one or more images (e.g., foveated image frames, such as the image frame 500 of FIG. 5, and/or other image frames) of a physical environment of the electronic device.

At block 1104, the electronic device (e.g., the sensor controller 704) may determine a color correction accuracy for the display content based on at least one of: information associated with display content (e.g., virtual content 212) to be displayed by the electronic device, or information associated with the physical environment of the electronic device (e.g., and/or other information, as discussed herein in connection with FIG. 8). In one or more implementations, determining the color correction accuracy may include determining a first color correction accuracy (e.g., a first range around the original chromaticity 300 of the display content) for a first portion (e.g., a portion corresponding to a foveal region of a user's current field of view) of the display system and a second color correction accuracy (e.g., a second range, larger than the first range, around the original chromaticity 300 of the display content), different from the first color correction accuracy, for a second portion of the display system. For example, the first portion of the display system may correspond to a foveal portion of a view of a user, and the second portion of the display system may correspond to a peripheral portion of the view of the user.

In one or more implementations, the process 1100 may also include detecting motion of an object in a region of the physical environment corresponding to the peripheral portion of the view of the user, and increasing the second color correction accuracy in the peripheral portion responsive to detecting the motion of the object (e.g., to account for the increase in color sensitivity of the human visual system in the peripheral vision, when a moving object is detected in the peripheral vision).

At block 1106, the electronic device (e.g., color correction block 706) may adjust a color of the display content based on the one or more images and the color correction accuracy. For example, adjusting the color of the display content may include adjusting a chromaticity of the display content from an original chromaticity (e.g., original chromaticity 300) to a first corrected chromaticity (e.g., corrected chromaticity 306 or corrected-boosted chromaticity 308 of FIG. 3) in a first region (e.g., foveal region 406) of the field of view of a user of the electronic device, and adjusting the chromaticity of the display content from the original chromaticity to a second corrected chromaticity (e.g., a corrected chromaticity that is near, but different from, the corrected chromaticity 306 or corrected-boosted chromaticity 308 of FIG. 3) in a second region (e.g., peripheral region 408) of the field of view of a user of the electronic device.

At block 1108, the electronic device may display, using a display system (e.g., display system 110) of the electronic device, the display content with the adjusted color to appear overlaid on a view of the physical environment through an at least partially transparent portion (e.g., transparent portion 205) of the display system of the electronic device.

In one or more implementations, the process 1100 may also include adjusting an operating feature of the image sensor based on one or both of: the information associated with the display content, or the information associated with the physical environment of the electronic device.

As described above, aspects of the subject technology may include the collection and transfer of data. The present disclosure contemplates that in some instances, this collected data may include personal information data that uniquely identifies or can be used to identify a specific person. Such personal information data can include images, sensor data, gaze information, head position and/or characteristic information, motion information, environment information, demographic data, location-based data, online identifiers, telephone numbers, email addresses, home addresses, data or records relating to a user's health or level of fitness (e.g., vital signs measurements, medication information, exercise information), date of birth, or any other personal information.

The present disclosure recognizes that the use of such personal information data, in the present technology, can be used to the benefit of users. For example, the personal information data can be used in adaptive imaging for color correction. Further, other uses for personal information data that benefit the user are also contemplated by the present disclosure. For instance, health and fitness data may be used, in accordance with the user's preferences to provide insights into their general wellness, or may be used as positive feedback to individuals using technology to pursue wellness goals.

The present disclosure contemplates that those entities responsible for the collection, analysis, disclosure, transfer, storage, or other use of such personal information data will comply with well-established privacy policies and/or privacy practices. In particular, such entities would be expected to implement and consistently apply privacy practices that are generally recognized as meeting or exceeding industry or governmental requirements for maintaining the privacy of users. Such information regarding the use of personal data should be prominently and easily accessible by users, and should be updated as the collection and/or use of data changes. Personal information from users should be collected for legitimate uses only. Further, such collection/sharing should occur only after receiving the consent of the users or other legitimate basis specified in applicable law. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations which may serve to impose a higher standard. For instance, in the US, collection of or access to certain health data may be governed by federal and/or state laws, such as the Health Insurance Portability and Accountability Act (HIPAA); whereas health data in other countries may be subject to other regulations and policies and should be handled accordingly.

Despite the foregoing, the present disclosure also contemplates implementations in which users selectively block the use of, or access to, personal information data. That is, the present disclosure contemplates that hardware and/or software elements can be provided to prevent or block access to such personal information data. For example, in the case of adaptive imaging for color correction, the present technology can be configured to allow users to select to "opt in" or "opt out" of participation in the collection of personal information data during registration for services or anytime thereafter. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing identifiers, controlling the amount or specificity of data stored (e.g., collecting location data at city level rather than at an address level), controlling how data is stored (e.g., aggregating data across users), and/or other methods such as differential privacy.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data.

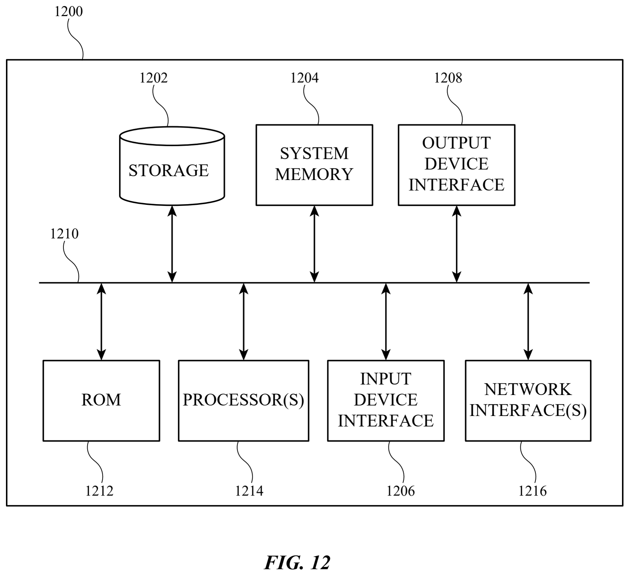

FIG. 12 illustrates an example computing device with which aspects of the subject technology may be implemented in accordance with one or more implementations. The computing device 1200 can be, and/or can be a part of, any computing device or server for generating the features and processes described above, including but not limited to a laptop computer, a smartphone, a tablet device, a wearable device such as a goggles or glasses, and the like. The computing device 1200 may include various types of computer readable media and interfaces for various other types of computer readable media. The computing device 1200 includes a permanent storage device 1202, a system memory 1204 (and/or buffer), an input device interface 1206, an output device interface 1208, a bus 1210, a ROM 1212, one or more processing unit(s) 1214, one or more network interface(s) 1216, and/or subsets and variations thereof.

The bus 1210 collectively represents all system, peripheral, and chipset buses that communicatively connect the numerous internal devices of the computing device 1200. In one or more implementations, the bus 1210 communicatively connects the one or more processing unit(s) 1214 with the ROM 1212, the system memory 1204, and the permanent storage device 1202. From these various memory units, the one or more processing unit(s) 1214 retrieves instructions to execute and data to process in order to execute the processes of the subject disclosure. The one or more processing unit(s) 1214 can be a single processor or a multi-core processor in different implementations.

The ROM 1212 stores static data and instructions that are needed by the one or more processing unit(s) 1214 and other modules of the computing device 1200. The permanent storage device 1202, on the other hand, may be a read-and-write memory device. The permanent storage device 1202 may be a non-volatile memory unit that stores instructions and data even when the computing device 1200 is off. In one or more implementations, a mass-storage device (such as a magnetic or optical disk and its corresponding disk drive) may be used as the permanent storage device 1202.

In one or more implementations, a removable storage device (such as a floppy disk, flash drive, and its corresponding disk drive) may be used as the permanent storage device 1202. Like the permanent storage device 1202, the system memory 1204 may be a read-and-write memory device. However, unlike the permanent storage device 1202, the system memory 1204 may be a volatile read-and-write memory, such as random access memory. The system memory 1204 may store any of the instructions and data that one or more processing unit(s) 1214 may need at runtime. In one or more implementations, the processes of the subject disclosure are stored in the system memory 1204, the permanent storage device 1202, and/or the ROM 1212. From these various memory units, the one or more processing unit(s) 1214 retrieves instructions to execute and data to process in order to execute the processes of one or more implementations.

The bus 1210 also connects to the input and output device interfaces 1206 and 1208. The input device interface 1206 enables a user to communicate information and select commands to the computing device 1200. Input devices that may be used with the input device interface 1206 may include, for example, alphanumeric keyboards and pointing devices (also called "cursor control devices"). The output device interface 1208 may enable, for example, the display of images generated by computing device 1200. Output devices that may be used with the output device interface 1208 may include, for example, printers and display devices, such as a liquid crystal display (LCD), a light emitting diode (LED) display, an organic light emitting diode (OLED) display, a flexible display, a flat panel display, a solid state display, a projector, or any other device for outputting information.

One or more implementations may include devices that function as both input and output devices, such as a touchscreen. In these implementations, feedback provided to the user can be any form of sensory feedback, such as visual feedback, auditory feedback, or tactile feedback; and input from the user can be received in any form, including acoustic, speech, or tactile input.

Finally, as shown in FIG. 12, the bus 1210 also couples the computing device 1200 to one or more networks and/or to one or more network nodes through the one or more network interface(s) 1216. In this manner, the computing device 1200 can be a part of a network of computers (such as a LAN, a wide area network ("WAN"), or an Intranet, or a network of networks, such as the Internet. Any or all components of the computing device 1200 can be used in conjunction with the subject disclosure.

Implementations within the scope of the present disclosure can be partially or entirely realized using a tangible computer-readable storage medium (or multiple tangible computer-readable storage media of one or more types) encoding one or more instructions. The tangible computer-readable storage medium also can be non-transitory in nature.

The computer-readable storage medium can be any storage medium that can be read, written, or otherwise accessed by a general purpose or special purpose computing device, including any processing electronics and/or processing circuitry capable of executing instructions. For example, without limitation, the computer-readable medium can include any volatile semiconductor memory, such as RAM, DRAM, SRAM, T-RAM, Z-RAM, and TTRAM. The computer-readable medium also can include any non-volatile semiconductor memory, such as ROM, PROM, EPROM, EEPROM, NVRAM, flash, nvSRAM, FeRAM, FeTRAM, MRAM, PRAM, CBRAM, SONOS, RRAM, NRAM, racetrack memory, FJG, and Millipede memory.

Further, the computer-readable storage medium can include any non-semiconductor memory, such as optical disk storage, magnetic disk storage, magnetic tape, other magnetic storage devices, or any other medium capable of storing one or more instructions. In one or more implementations, the tangible computer-readable storage medium can be directly coupled to a computing device, while in other implementations, the tangible computer-readable storage medium can be indirectly coupled to a computing device, e.g., via one or more wired connections, one or more wireless connections, or any combination thereof.

Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. As recognized by those of skill in the art, details including, but not limited to, the number, structure, sequence, and organization of instructions can vary significantly without varying the underlying logic, function, processing, and output.

While the above discussion primarily refers to microprocessor or multi-core processors that execute software, one or more implementations are performed by one or more integrated circuits, such as ASICs or FPGAs. In one or more implementations, such integrated circuits execute instructions that are stored on the circuit itself.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or partitioned in a different way) all without departing from the scope of the subject technology.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Any of the blocks may be performed simultaneously. In one or more implementations, multitasking and parallel processing may be advantageous. Moreover, the separation of various system components in the implementations described above should not be understood as requiring such separation in all implementations, and it should be understood that the described program components (e.g., computer program products) and systems can generally be integrated together in a single software product or packaged into multiple software products.

As used in this specification and any claims of this application, the terms "base station", "receiver", "computer", "server", "processor", and "memory" all refer to electronic or other technological devices. These terms exclude people or groups of people. For the purposes of the specification, the terms "display" or "displaying" means displaying on an electronic device.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The predicate words "configured to", "operable to", and "programmed to" do not imply any particular tangible or intangible modification of a subject, but, rather, are intended to be used interchangeably. In one or more implementations, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code.

Phrases such as an aspect, the aspect, another aspect, some aspects, one or more aspects, an implementation, the implementation, another implementation, some implementations, one or more implementations, an embodiment, the embodiment, another embodiment, some implementations, one or more implementations, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

The word "exemplary" is used herein to mean "serving as an example, instance, or illustration". Any embodiment described herein as "exemplary" or as an "example" is not necessarily to be construed as preferred or advantageous over other implementations. Furthermore, to the extent that the term "include", "have", or the like is used in the description or the claims, such term is intended to be inclusive in a manner similar to the term "comprise" as "comprise" is interpreted when employed as a transitional word in a claim.

All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. § 112(f) unless the element is expressly recited using the phrase "means for" or, in the case of a method claim, the element is recited using the phrase "step for".

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language claims, wherein reference to an element in the singular is not intended to mean "one and only one" unless specifically so stated, but rather "one or more". Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

## Claims

1. A method, comprising:
obtaining, by an electronic device having an image sensor, information associated with display content to be displayed by the electronic device;
capturing, using the image sensor, one or more images of a physical environment of the electronic device, at least in part by adjusting an operating feature of the image sensor based on the information associated with the display content;
adjusting a color of the display content based on the one or more images; and
providing the display content, with the adjusted color, for display by the electronic device to appear overlaid on a view of the physical environment through an at least partially transparent portion of the electronic device.

2. The method of claim 1, wherein the information associated with the display content comprises a color of the display content.

3. The method of claim 1, wherein the information associated with the display content comprises a type of the display content.

4. The method of claim 3, wherein the type of the display content comprises a text content type or a memory-colored content type.

5. The method of claim 1, wherein adjusting the operating feature comprises setting a first pixel resolution for a first portion of the image sensor and a second pixel resolution, different from the first pixel resolution, for a second portion of the image sensor.

6. The method of claim 5, wherein setting the first pixel resolution and the second pixel resolution comprises determining a binning style for binning pixel values in the first portion and the second portion of the image sensor.

7. The method of claim 1, wherein adjusting the operating feature comprises setting a first frame rate for a first portion of the image sensor and a second frame rate, different from the first frame rate, for a second portion of the image sensor.

8. The method of claim 1, wherein adjusting the operating feature comprises setting a first color capture type for a first portion of the image sensor and a second color capture type, different from the first color capture type, for a second portion of the image sensor.

9. The method of claim 1, wherein adjusting the operating feature comprises adjusting the operating feature based on the information associated with the display content and based on one or more of: a device motion of the electronic device, an object motion of an object in the physical environment, a user preference, background information for the physical environment, concurrent experience information for the electronic device, and/or a system setting for the electronic device.

10. The method of claim 1, wherein the at least partially transparent portion of the electronic device comprises an at least partially transparent display that allows the view of the physical environment through the at least partially transparent display.

11. The method of claim 1, wherein the at least partially transparent portion of the electronic device comprises a lens, and wherein the method further comprising displaying the display content, with the adjusted color, to appear overlaid on the view of the physical environment through the at least partially transparent portion of the electronic device by projecting the display content, with the adjusted color, onto the lens.

12. The method of claim 1, further comprising:
obtaining, by the electronic device having the display system and the image sensor,
information associated with the physical environment of the electronic device,
wherein adjusting the operating feature of the image sensor further comprises adjusting the operating feature of the image sensor based on the information associated with the physical environment.

13. The method of claim 12, wherein the information associated with the physical environment comprises one or more of: a color of the physical environment, a type of an object in the physical environment, or a visual complexity of the physical environment.

14. The method of claim 12, wherein obtaining the information comprises:
capturing, prior to capturing the one or more images, a prior image of the physical environment with the image sensor; and
determining the information associated with the physical environment based on the prior image.

15. An electronic device, comprising:
a memory; and
one or more processors configured to perform the method of any of claims 1-14.
